(19) Europäisches Patentamt / European Patent Office / Office européen des brevets

(11) **EP 4 635 606 A1**

# (12) DEMANDE DE BREVET EUROPEEN

(43) Date de publication:
**22.10.2025 Bulletin 2025/43**

(21) Numéro de dépôt: **25171414.3**

(22) Date de dépôt: **17.04.2025**

(51) Classification Internationale des Brevets (IPC):
**B01D 53/62** (2006.01)     **B01D 53/04** (2006.01)
**C01B 32/50** (2017.01)

(52) Classification Coopérative des Brevets (CPC):
**B01D 53/62; B01D 53/0415; C01B 32/50;**
B01D 2251/404; B01D 2251/606; B01D 2253/102;
B01D 2257/504; B01D 2258/06; B01D 2259/4508;
F24F 8/15; F24F 2110/70

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.04.2024 FR 2404060**

(71) Demandeur: **Etchenique, Thomas**
**31570 Bourg-Saint-Bernard (FR)**

(72) Inventeur: **Etchenique, Thomas**
**31570 Bourg-Saint-Bernard (FR)**

(74) Mandataire: **BARRE LAFORGUE**
**35, rue Lancefoc**
**31000 Toulouse (FR)**

(54) **CARTOUCHE D'ABSORPTION DE CO2, SYSTÈME DE VENTILATION ET PROCÉDÉ DE FABRICATION DE LA CARTOUCHE**

(57) L'invention concerne une cartouche d'absorption de CO2 configurée pour être intégrée à un système de ventilation d'un bâtiment de manière à être disposée au passage de l'air.

La cartouche d'absorption comporte un média perméable à l'air qui monté sur un cadre et des dépôts de matière d'absorption du CO2 qui sont réalisés sur le média.

Le pourcentage d'emprise de la matière d'absorption sur la surface du média étant défini en fonction d'une perte de charge initiale du flux d'air qui est autorisée, par le système de ventilation, au passage du média afin de maintenir une ventilation adaptée du bâtiment.

L'invention concerne aussi un système de ventilation, un procédé de fabrication de la cartouche et l'installation pour la mise en œuvre du procédé

[Fig. 1]

EP 4 635 606 A1

**Description**

**[Domaine technique]**

L'invention concerne une cartouche d'absorption de dioxyde de carbone (CO2) pour un système de ventilation. L'invention concerne également le système de ventilation qui intègre la cartouche d'absorption selon l'invention, mais aussi un procédé de fabrication de ladite cartouche et une installation pour la mise en œuvre du procédé de fabrication.

**[État de la technique antérieure]**

L'augmentation du taux de dioxyde de carbone (CO2) dans l'atmosphère est l'une des préoccupations majeures du XXIème siècle. A l'heure de la rédaction de cette demande de brevet le CO2 est reconnu comme l'un des principaux gaz à effet de serre. Ces gaz à effet de serre sont responsables du réchauffement climatique, un phénomène aux conséquences potentiellement dévastatrices pour notre planète et ses habitants. Les émissions de CO2 sont largement attribuées à l'activité humaine, notamment à la combustion des combustibles fossiles pour la production d'énergie, aux processus industriels et aux modes de transport. Face à cette problématique, outre la réduction des émissions de gaz à effet de serre, la captation du CO2 pourrait constituée une solution parmi d'autres pour atténuer le phénomène de réchauffement climatique.

La captation du CO2 consiste à retirer ce gaz de l'atmosphère ou des sources émettrices pour le stocker de manière permanente ou pour l'utiliser dans des applications utiles, telles que la production d'énergie, la fabrication de matériaux ou la stimulation de la croissance des plantes.

Cependant, la captation du CO2 soulève également plusieurs défis et dilemmes. Tout d'abord, les technologies de captation doivent être efficaces, abordables et écologiquement viables, ceci, pour être largement déployées à l'échelle mondiale. Par ailleurs, le stockage du CO2 capté pose des questions de sécurité et d'impact environnemental à long terme, notamment pour éviter que le CO2 qui a été capturé soit relargué dans l'atmosphère. De plus, il est crucial d'évaluer attentivement les implications socio-économiques et éthiques de ces technologies, en tenant compte des questions telles que l'accès équitable aux avantages de la captation du CO2 et ses éventuels effets sur les communautés locales et les écosystèmes.

Dans ce contexte, le document GB2476638 décrit une cartouche de captation du CO2 destinée à être utilisée dans des chaudières à gaz, à mazout ou à bois, des chauffe-eaux ou des chauffages d'air. La cartouche est conçue pour être placée entre la chambre de combustion et le point de libération des gaz dans l'atmosphère, réduisant ainsi les émissions de CO2 produites par le processus de combustion. La cartouche est ici logée dans un boîtier perforé rempli d'un milieu de capture de CO2, tel que de l'oxyde de calcium, de l'hydroxyde de lithium, de la chaux sodée, de l'hydroxyde de sodium, de l'hydroxyde de potassium, du charbon actif ou un mélange de ces substances.

La cartouche est conçue pour contenir un moyen de capture de CO2, tel que des substances chimiques spécifiques ou du charbon actif, qui réagissent avec le CO2 pour le piéger de manière temporaire ou permanente.

Toutefois, la solution de captation du CO2 dans ce document est limitée à une application de filtration des gaz issus d'une chambre de combustion.

L'invention vise à pallier tout ou partie de ces inconvénients.

**[Exposé de l'invention]**

L'invention vise à fournir une solution technique permettant de capter du CO2 pour des applications variées afin d'augmenter l'usage des solutions de captation du CO2.

Dans ce contexte un mode de réalisation l'invention se rapport à une cartouche d'absorption de CO2 configurée pour être intégrée à un système de ventilation d'un bâtiment de manière à être disposée au passage de l'air, la cartouche d'absorption comportant :

- un cadre de forme et de dimensions déterminées,

- un média perméable à l'air qui s'étend à l'intérieur du cadre et constitue une surface utile de passage de l'air,

- une matière d'absorption du CO2 qui est déposée à la surface du média, le dépôt de la matière d'absorption comportant une emprise sur la surface du média qui est comprise entre 4 et 30 % de la surface du média.

La cartouche d'absorption de dioxyde de carbone (CO2) peut ainsi être intégrée aux systèmes de ventilation et notamment aux groupes extérieurs tels que les pompes à chaleurs air/air ou air/eau des systèmes de ventilation. Il est ainsi possible de capter le CO2 atmosphérique au travers notamment de l'ouïe d'aspiration de la pompe à chaleur. Néanmoins,

**EP 4 635 606 A1**

l'ajout d'un média dans un circuit aéraulique produit de la pression statique au passage du flux d'air. Cette pression statique peut entrainer une perte de charges dans le réseau aéraulique. Prenant ceci en considération, l'inventeur a défini un pourcentage de surface du média recouvert par la matière d'absorption qui permet de respecter les pertes de charge préconisées par les constructeurs. Le pourcentage d'emprise de la matière d'absorption du $CO_2$ permet notamment de respecter une perte de charges initiale autorisée par les constructeurs d'unité de ventilation. Cette perte de charges autorisée peut être comprise entre 30 et 80 Pa. La perte de charges est définie dans un circuit aéraulique de part et d'autre de la cartouche d'absorption tel que cela est décrit dans la partie expérimentale. Une cartouche conforme de l'invention peut ainsi être installée sur les systèmes de ventilation d'un grand nombre de constructeurs de matériel de ventilation. Les capacités d'absorption du $CO_2$ de ladite matière d'absorption sont toutefois limitées, il est donc nécessaire de la remplacer périodiquement tel que cela est décrit dans ce document. Il est ainsi possible d'équiper, à l'installation ou en seconde monte, des systèmes de ventilation avec une ou plusieurs cartouches filtrantes conformes d'un mode de réalisation.

Dans ce document, le pourcentage d'emprise de la matière d'absorption du $CO_2$ correspond à la surface du média qui est recouverte par le dépôt de ladite matière par rapport à la surface totale du média.

[Emprise de la matière d'absorption du $CO_2$]

Dans des modes de réalisation, le dépôt de la matière d'absorption du $CO_2$ peut être réalisé sur une seule face du média. Le dépôt de matière d'absorption du $CO_2$ peut également réalisé sur les deux faces du média. Un tel dépôt double face peut, être utile, lorsque la cartouche d'absorption est montée sur le groupe extérieur d'un système de ventilation.

Dans des modes de réalisation, ledit pourcentage d'emprise du dépôt de la matière d'absorption du $CO_2$ sur la surface du média peut être compris entre 4 et 30 %, ledit pourcentage peut être également être compris entre 10% et 30 %, en outre, ledit pourcentage peut être compris entre 20% et 30%. L'inventeur a découvert de manière étonnante que l'influence du pourcentage d'emprise de la matière d'absorption était faible voir négligeable, lorsque le pourcentage est inférieur à 50%, de préférence inférieur à 40% de la surface du média. La partie expérimentale expose des données qui justifient cet effet étonnant en particulier lorsque le média ne comporte pas de filtres. Lorsque le média comporte un filtre le pourcentage d'emprise est moins important car le filtre produit une pression statique plus importante comme cela est montrée dans la partie expérimentale. Ainsi, lorsque le média comprend un filtre, le pourcentage d'emprise peut être compris entre 4 et 20 %, de préférence, le pourcentage d'emprise pour un média comprenant un filtre peut être compris entre 5 et 16%. De préférence, le pourcentage d'emprise correspond au pourcentage d'emprise d'une face du média qu'il comporte un filtre ou non. Ainsi, une plage de 4% à 30% peut être adaptée à la fois à l'utilisation d'un média simple et d'un média comprenant un filtre. Chaque face du média peut ainsi comprendre un pourcentage d'emprise conforme de l'invention.

Dans des modes de réalisation, le dépôt de matière d'absorption du $CO_2$ peut être réparti, à la surface du média, par alternance de zones de dépôt de matière d'absorption et de zones de passage d'air qui ne sont pas recouvertes de matière d'absorption du $CO_2$, l'alternance desdites zones est aléatoire ou géométrique. L'alternance de zone de dépôt de matière et de zone de passage d'air permet de réduire les pertes des charges que produit la cartouche d'absorption au passage du flux d'air.

En particulier, dans des modes de réalisation, le dépôt de matière d'absorption du $CO_2$ peut être réparti sur le média selon une ou plusieurs unités d'absorption. En particulier, les unités d'absorption peuvent comporter une ou plusieurs formes géométriques déterminées.

Dans des modes de réalisation, la matière d'absorption du $CO_2$ peut être répartie à la surface du média selon des dépôts en forme de bâtonnets de dimensions déterminées. En particulier, les bâtonnets peuvent comprendre un diamètre compris entre 5 mm et 20 mm, de préférence entre 10 mm et 16 mm. Plus le diamètre est grand plus le volume de matière d'absorption est important ce qui améliore la capacité de captation du $CO_2$ de la cartouche en modifiant peu le pourcentage d'emprise sur le média de la matière d'absorption, voir partie expérimentale. En effet, la dimension en largeur de chaque bâtônnet qui est en emprise sur le média est inférieure à son diamètre. Les données expérimentales qui justifient ce phénomène surprenant.

Dans des modes de réalisation la surface d'emprise peut être augmentée en augmentant le nombre de bâtonner disposés à la surface du média. L'installateur peut ainsi jouer sur plusieurs paramètres pour obtenir une surface d'emprise conforme de l'invention.

Dans des modes de réalisation, les bâtonnets peuvent être disposés de manière parallèle sur le média. Les dimensions et l'agencement des bâtonnets améliorent la capacité d'absorption de $CO_2$ en contrôlant l'impact que cela produit sur la pression statique au média au passage du flux d'air.

Dans des modes de réalisation, la cartouche peut comprendre un entrefer entre les dépôts de matière qui peut être compris entre 1 et 5 cm. Ceci permet de charger le média sans faire augmenter la pression statique qui est produite au passage du flux d'air au travers de la cartouche.

Dans des modes de réalisation, les bâtonnets peuvent comprendre une armature externe. L'armature externe améliore la cohésion de la matière qui conformée sous forme de bâtonnets. L'armature peut s'étendre longitudinalement et ficeler radialement le bâtonnet sur sa longueur. D'ailleurs, une ficelle qui peut être utilisée pour réaliser l'armature. Par exemple, l'armature peut comprendre un premier brin de ficelle qui peut s'étendre longitudinalement en tournant au tour du bâtonnet. L'armature peut comprendre un deuxième brin de ficelle qui peut quant à lui s'étendre longitudinalement selon un axe longitudinal du bâtonnet. Un ou plusieurs bâtonnets voire tous les bâtonnets d'une même cartouche d'absorption peuvent comprendre une telle armature.

Dans des modes de réalisation, la section transversale de chaque bâtonnet peut prendre différentes formes telles que circulaire ou rectangulaire ou triangulaire.

[Matière d'absorption du CO2]

Dans des modes de réalisation, la matière d'absorption du CO2 peut être configurée pour absorber le CO2 par carbonatation. L'absorption par carbonatation permet d'utiliser la matière carbonatée à d'autres fins ou de la régénérer ensuite en piégeant le CO2 lors de sa régénération.

Dans des modes de réalisation, la matière d'absorption du CO2 est choisie parmi les substances suivantes : l'oxyde de calcium, de l'hydroxyde de lithium, de la chaux sodée, de l'hydroxyde de sodium, de l'hydroxyde de potassium, du charbon actif ou un mélange de ces substances.

Dans des modes de réalisation, la matière d'absorption du CO2 comprend de l'oxyde de calcium. L'oxyde calcium présente l'avantage de pouvoir être produit à faibles coûts et en grande quantité.

[Média]

Dans des modes de réalisation, le média peut comporter des mailles de dimensions déterminées, de préférence, les mailles comprennent des dimensions comprises entre 3 mm x 2 mm et 10 mm x 8 mm, encore de préférence, les mailles comprennent des dimensions comprises entre 4 mm x 3 mm et 6 mm x 5 mm, et encore de préférence, les mailles comprennent des dimensions de 5 mm x 4 mm. Le maillage du média permet de réduire la pression statique qui s'exerce autour de la cartouche au passage d'un flux d'air. La charge de matière d'absorption peut ainsi être augmentée. Selon ce mode de réalisation la cartouche d'absorption peut être montée en sortie ou en entrée d'un compresseur d'un groupe extérieur d'un système de ventilation. Le média peut être une feuille de matériau perméable aux gaz et notamment à l'air. Une seule face du média peut être chargée en matériau absorbant. Alternativement, les deux faces du média peuvent ainsi être chargées en matériau absorbant selon le pourcentage d'emprise tel que revendiqué.

Dans des modes réalisation, le média peut comprendre un matériau choisi parmi la liste de suivante : polyester, polyéthylène, fibres de verre, des fibres naturelles telles que le lin, du chanvre, de jute ou du coton ou un mélange de ces matériaux. Avantageusement, les fibres naturelles peuvent être ignifugées au préalable.

Dans des modes de réalisations, le média peut comprendre un filtre à air, de préférence, le filtre à air comprend une épaisseur comprise entre 10 mm et 120 mm, l'épaisseur s'étendant dans le sens de circulation du flux d'air. Selon ces modes de réalisation, la cartouche peut être installée dans les gaines de ventilation d'une VMC ou d'un système d'air conditionné de type gainable.

Dans des modes de réalisation, le filtre à air peut comprendre un matériau polymérique poreux tel que le polyester, le polyéthylène etc.

[Cadre]

Dans des modes de réalisation, la forme et les dimensions du cadre sont adaptées à une section transversale d'un conduit aéraulique et/ou aux dimensions d'une ouïe de ventilateur et/ou aux dimensions et à la forme d'une ouïe de ventilation. Par exemple, le cadre peut être rectangulaire ou carré mais également circulaire selon la forme de la gaine et/ou de l'ouïe d'ouverture d'un ventilateur/compresseur.

Dans des modes de réalisation, le cadre comprend un matériau métallique tel que l'acier galvanisé. Le cadre peut ainsi être réutilisé alors que le média est remplacé et rechargé en matière d'absorption de CO2.

En fonction des dimensions des gaines aérauliques et/ou des ventilateurs, le cadre peut avoir plusieurs dimensions telles que, pour des cadres de forme carrée, 500x500 mm, 600x 600 mm, 700 x 700 mm.

[Système de ventilation]

Un mode de réalisation de l'invention concerne un système de ventilation comportant une cartouche d'absorption de CO2 conforme de l'invention, le système comportant au moins un support configuré pour disposer ladite cartouche dans un flux d'air produit par un ventilateur.

Dans des modes de réalisation, le support est disposé sur une ouïe d'aspiration ou de ventilation d'un groupe extérieur d'un système d'air conditionné.

Dans des modes de réalisation, ledit support peut être disposé dans un conduit aéraulique, par exemple, dans le cadre d'un système d'air conditionné de type gainable ou d'un système d'extraction d'air de type VMC.

A noter qu'un système de ventilation de type gainable peut aussi comprendre un support pour la cartouche d'absorption conforme de l'invention sur le groupe extérieur du système de ventilation.

[Procédé de fabrication d'une cartouche d'absorption]

Un autre mode de réalisation de l'invention concerne un procédé de fabrication d'une cartouche d'absorption de $CO_2$ définie selon un mode de réalisation de l'invention, le procédé de fabrication comportant :

- La mise en poudre du matériau d'absorption du $CO_2$,

- L'extrusion du matériau d'absorption du $CO_2$,

- Le dépôt dudit matériau d'absorption extrudé sur un média selon une disposition déterminée,

- La découpe du média chargé en matériau d'absorption du $CO_2$ extrudé, et

- La fixation du média découpé et chargé en matériau du $CO_2$ sur un cadre.

Dans des modes de réalisation, lors de l'extrusion, le matériau d'absorption peut être conformé sous forme de bâtonnet qui peut être ensuite déposé à la surface du média.

Dans des modes de réalisation, le procédé peut effectuer l'extrusion simultanée de plusieurs bâtonnets. Avantageusement, le média peut être entrainé en déplacement simultanément à l'extrusion du boudin afin déposer directement le ou les boudins en formation à la surface du média. Par exemple, une laize de média peut être entrainée en rotation par des moyens de mise en rotation, tels qu'un ou des rouleaux d'entrainement. En outre, la laize de média peut-être avantageusement est disposée en sortie de l'extrudeuse de façon à recevoir directement le ou les boudins en formation. Le ou les boudins se déposent ainsi longitudinalement sur la laize tout au cours de leur formation par extension longitudinale. La vitesse de déplacement de laize peut être réglée par rapport à la vitesse d'extrusion pour améliorer le procédé de fabrication.

Dans des modes de réalisation, le procédé peut comporter le renforcement du ou des bâtonnets. En particulier, le procédé peut comprendre une étape de ficelage du bâtonnet afin maintenir la cohésion de la matière d'absorption du $CO_2$. Lors de cette étape une armature peut être déployée autour du boudin en cours d'extrusion afin de l'enserrer. En particulier, la partie du boudin qui sort de la filière peut être entouré radialement par le dépôt d'un premier brin de ficelle. A cet effet, une filière rotative distribuant de la ficelle peut être montée en sortie de l'extrudeuse. Le procédé peut comprendre la dépose longitudinale d'un second brin de ficelle sur le boudin en formation. Une filière fixe peut être configurée pour déposer le second brin longitudinalement sur le boudin en formation. La filière rotative et la filière fixe peuvent être alimentées en ficelle.

Dans des modes de réalisation, l'étape de découpe peut comprendre la découpe simultanée de la laize de média et du ou des boudins. Ceci permet de former des bâtonnets d'oxyde de calcium de dimensions, notamment longitudinales, adaptées à la cartouche.

Dans des modes de réalisation, le procédé de fabrication peut comprendre une étape d'emballage de la cartouche d'absorption de $CO_2$. L'étape d'emballage peut être faite sous vide. Cette étape permet de réduire les échanges entre l'air et les bâtonnets d'oxyde de calcium, ces derniers sont déballés lors de l'installation de la cartouche et disposent ainsi d'une capacité d'absorption de $CO_2$ optimale en fonctionnement, par rapport, à leur capacité d'absorption qui est limitée. L'emballage améliore la durée des cycles de remplacement des cartouches d'absorption.

Dans des modes de réalisation, l'étape de fixation peut consister à attacher le média au cadre, par exemple, par collage ou enserrement dans une gorge périphérique ménagée dans les bords internes du cadre.

En outre, si le fabricant souhaite fabriquer une cartouche d'absorption comprenant un média filtrant, une laize de matériau filtrant est directement employée dans un procédé conforme d'un mode de réalisation de l'invention.

Dans des modes de réalisation, l'invention concerne aussi, une machine de fabrication pour la fabrication d'une cartouche d'absorption de $CO_2$ conforme de l'invention. La machine de fabrication comprenant une extrudeuse configurée pour produire un ou des boudins de matière d'absorption de $CO_2$, l'extrudeuse étant alimentée en matière d'absorption de $CO_2$. En particulier, la machine peut comprendre une trémie qui alimente l'extrudeuse en matière d'absorption de $CO_2$ pour réaliser l'extrusion. La machine peut encore comprendre des moyens d'entrainement d'une laize de média, les moyens d'entrainement étant disposés en sortie de l'extrudeuse. Le ou les boudins se déposent alors sur la laize en sortie de l'extrudeuse. Avantageusement, les moyens d'entrainement sont configurés pour que la vitesse de déplacement de la laize soit corrélée avec la vitesse d'extrusion du ou des boudins.

Dans des modes de réalisation, la machine de fabrication peut comprendre un module de rigidification du ou des boudins en formation. Ce module est configuré pour permettre la mise en place d'une armature autour du ou des boudins en formation. Par exemple, le module de rigidification peut comprendre une filière rotative en sortie de chaque filière de l'extrudeuse qui dépose un brin de ficelle en tournant autour de la sortie de la filière de l'extrudeuse. Le module de rigidification peut également comprendre une filière fixe disposée à la sortie de chaque filière de l'extrudeuse. La filière fixe dépose alors une ficelle longitudinalement pour chaque boudin en formation.

Dans des modes de réalisation, la machine de fabrication peut comprendre un outil de découpe de la laize de média, l'outil de découpe étant disposé et configuré pour découper le média supportant le ou les boudins de matière d'absorption.

[Description des dessins]

D'autres caractéristiques et avantages de l'invention apparaîtront encore à la lecture de la description qui va suivre. Celle-ci est purement illustrative et doit être lue en regard des dessins annexés sur lesquels :

[Fig. 1], [Fig. 2], [Fig. 3], [Fig. 4], [Fig. 5], [Fig. 6] sont des représentations de modes de réalisation de cartouches d'absorption de CO2 qui sont conformes de l'invention.

[Fig. 7] est une représentation schématique de plusieurs sections transversales que peuvent prendre les bâtonnets de matières d'absorption de CO2 conformément à des modes de réalisation de l'invention.

[Fig. 8] est une représentation schématique d'un système de ventilation, un groupe extérieur par exemple, le compresseur d'une pompe à chaleur, intégrant une cartouche d'absorption de CO2 conforme d'un mode de réalisation de l'invention.

[Fig. 9] est une représentation schématique d'un système de ventilation, un groupe extérieur, par exemple, le compresseur d'une pompe à chaleur, intégrant une cartouche d'absorption de CO2 conforme d'un mode de réalisation de l'invention.

[Fig. 10] est une représentation d'un logigramme illustrant schématiquement un procédé de fabrication d'une cartouche d'absorption de CO2 conforme de l'invention.

[Fig. 11] est une représentation schématique latérale d'une machine de fabrication d'un média sur lequel est déposé de la matière d'absorption de CO2 conformément à un mode de réalisation de l'invention.

[Fig. 12] est une représentation schématique d'une installation expérimentale qui a permis de réaliser des tests afin de définir la perte de charge que produit la cartouche d'absorption de CO2 en fonction de la surface d'emprise de la matière d'absorption sur le média.

**[Description** des modes de réalisation]

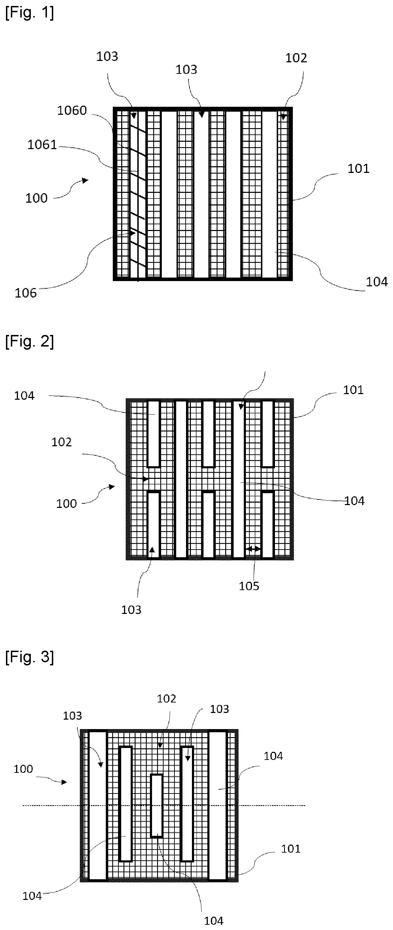

En référence à la figure 1 à 6, l'invention concerne une cartouche d'absorption 100 de CO2 configurée pour être intégrée à un système de ventilation 200 d'un bâtiment. En particulier la cartouche d'absorption 100 de CO2 est intégrée au passage de l'air dans le système de ventilation 200.

En effet, chaque bâtiment comprend un système de ventilation pour l'extraction ou l'insufflation d'air, ceci pour renouveler l'air circulant dans ce bâtiment. Par ailleurs, les avancées technologiques ont rendu les systèmes d'air conditionné encore appelés climatisations réversibles plus sobres d'un point de vue énergétique. Or, le développement de ces systèmes d'air conditionné est en grande partie motivé par la nécessité de fournir un confort thermique efficace tout au long de l'année. En effet, ces systèmes permettent non seulement de refroidir l'intérieur des bâtiments pendant les périodes chaudes, mais aussi de les chauffer lorsqu'il fait froid. L'inventeur a ainsi développé une cartouche d'absorption 100 de CO2 adaptée à être utilisée dans un système de ventilation pour capter du dioxyde de carbone (CO2) atmosphérique et/ou du dioxyde de carbone présent dans le réseau de ventilation ou encore dans les pièces ventilées de ce bâtiment.

Selon un mode de réalisation, la cartouche d'absorption 100 comporte un cadre 101 configurées pour être intégré, dans un système de ventilation 200, au passage de l'air. C'est pourquoi la forme et les dimensions du cadre 101 peuvent être différentes afin d'être adaptées à l'ouïe d'un conduit aéraulique, à l'ouïe d'une bouche de ventilation d'une pièce ventilée, ou encore à l'ouïe d'un ventilateur du système de ventilation. En particulier, le cadre 101 peut être adapté pour être fixé à l'ouïe du ventilateur d'un compresseur d'un groupe extérieur d'un système d'air conditionné. La cartouche 100 peut alors absorber du CO2 provenant de l'atmosphère.

Selon les modes de réalisation illustrés aux figures 1 à 6, le cadre 101 peut être rectangulaire ou circulaire. Le cadre 101 selon l'invention peut également prendre d'autres formes géométriques qui peuvent être ovales, quadrangulaires, triangulaires etc.

Selon un mode de réalisation, les dimensions du cadre 100 peuvent être définies par la diagonale lorsque le cadre 101 est un rectangle ou par le diamètre lorsque le cadre 100 est circulaire. La diagonale ou le diamètre du cadre 101 peuvent être compris entre 400 mm et 1000 mm. Ces dimensions permettent d'utiliser le cadre 101 dans des ouïes de conduit aéraulique ou de ventilateurs dont les dimensions peuvent être 500x500 mm, 600x 600 mm, 700 x 700 mm. Toutefois, selon l'invention, les dimensions peuvent être adaptées à tous types de dimensions d'ouïes aérauliques ou de ventilateur.

Selon un mode de réalisation, le cadre 101 peut être réalisé dans un matériau rigide appartenant à la famille des métaux. En particulier, le cadre 101 peut être réalisé en acier. A noter que l'acier galvanisé est particulièrement adapté pour intégrer la cartouche d'absorption 100 à un système de ventilation 200. L'acier galvanisé constitue un bon compromis en termes de coûts de production et de résistance au feu.

Comme cela est visible aux figures 1 à 6, le cadre 101 délimite par son bord interne la surface utile de passage de l'air. Or, selon un mode de réalisation, la cartouche d'absorption 100 comporte un média 102 perméable à l'air. Dans ces modes de réalisation, le média 102 est représenté schématiquement par une surface quadrillée qui s'étend à l'intérieur du cadre 101. Le média 102 constitue la surface utile de passage de l'air. Comme illustré aux figures 1 à 6, le média peut être une feuille de matériau perméable au gaz.

L'inventeur s'est aperçu qu'une des problématiques du développement de la cartouche d'absorption 100 pour les systèmes de ventilation 200 concerne la pression statique qui se produit au niveau de la cartouche. En effet, si cette pression statique est trop importante elle peut conduire à la réduction de l'efficacité du système de ventilation 200. Bien entendu, il convient d'éviter une telle situation pour les constructeurs de matériel de ventilation ne s'opposent pas à l'utilisation de la cartouche d'absorption 100 avec leur matériel.

Dans cette optique, selon un mode de réalisation, le média 102 peut comporter des mailles de dimensions déterminées. Les mailles permettent d'assurer la perméabilité à l'air du média est ainsi de réduire la pression statique générée par le média 102 au sein du système de ventilation 200. De préférence, les mailles comprennent des dimensions comprises entre 3 mm x 2 mm et 10 mm x 8 mm, encore de préférence, les mailles comprennent des dimensions comprises entre 4 mm x 3 mm et 6 mm x 5 mm, et encore de préférence, les mailles comprennent des dimensions de 5 mm x 4 mm.

En outre, le média 102 peut comprendre un matériau choisi parmi la liste de suivante : polyester, polyéthylène, des fibres de verre, des fibres naturelles telles que le lin, le chanvre, le jute, le coton ou un mélange de ces matériaux. Les fibres naturelles peuvent être, au préalable, ignifugées.

Un tel média perméable peut être utilisé pour être intégré dans des systèmes de ventilation qui ne nécessitent pas de filtration de l'air, tels que les groupes extérieurs pour les systèmes d'air conditionnés utilisant des pompes à chaleur (PAC), les ventilations mécaniques contrôlées (VMC), les systèmes de traitement de l'air tels que les VMC doubles flux, les purificateurs, et de manière générale les compresseurs ou tous systèmes de pompe à chaleur.

Selon un autre mode de réalisation, le média 102 comprend un filtre à air, le média peut être alors qualifié de média filtrant. Le filtre à air est utile dans toutes applications qui nécessitent l'emploi d'un filtre tel que la ventilation d'un bâtiment, l'air conditionné de type gainable qui comporte des grilles de reprise d'air équipées de filtres à air. De préférence, le filtre à air comprend une épaisseur comprise entre 10 mm et 120 mm. L'épaisseur du filtre est une dimension qui est perpendiculaire de la surface du média 102 et s'étend dans le sens de circulation du flux d'air passe au travers du filtre. Selon un mode de réalisation, le filtre à air peut comprendre un matériau polymérique poreux tel que le polyester, le polyéthylène, mais aussi, des matériaux fibreux tels que le papier.

Selon des modes de réalisation illustrés aux figures 1 à 6, la cartouche d'absorption 100 de CO2 peut comprendre une matière d'absorption 103 du CO2 qui est répartie à la surface du média 102. La matière d'absorption 103 peut ainsi absorber le dioxyde de carbone du flux d'air traversant le média 102 de la cartouche d'absorption 100.

La répartition de la matière d'absorption 103 du dioxyde de carbone sur le média 102 augmente ainsi la pression statique qui est produite au niveau de la cartouche d'absorption 100. C'est pourquoi selon un mode de réalisation, le dépôt de la matière d'absorption 103 comporte une emprise sur le média 102 qui correspond à un pourcentage déterminé de la surface du média 102. En particulier, le pourcentage de surface du média 102 qui est recouvert de la matière d'absorption est défini en fonction d'une perte de charge initiale autorisée par le système de ventilation 200 au passage du média 102 afin de maintenir une ventilation adaptée du bâtiment. La matière d'absorption 103 peut être disposée sur une seule face ou sur les deux faces du média 102.

Selon un mode de réalisation, la perte de charges initiale autorisée dans le système de ventilation 200 peut être comprise entre 30 et 80 Pa. L'inventeur a défini la perte de charges initiale autorisée en se calquant sur les pertes de charges initiales autorisées au niveau des filtres à air qui sont intégrés au système de ventilation. Par exemple, un filtre à air disposé en reprise d'air vicié pour un système d'air conditionné utilisant une installation gainable. Les pertes de charge autorisées sont d'ailleurs définies par les constructeurs de matériel de ventilation.

Selon un mode réalisation, l'inventeur a défini, en tenant en considération les pertes de charges initiales autorisées, que le pourcentage d'emprise du dépôt de matière d'absorption 103 à la surface du média 102 peut être compris entre 4 et 50 %. Ledit pourcentage d'emprise par le dépôt de la matière d'absorption 103 du CO2 sur la surface du média 102 peut aussi être compris entre 10 et 40%. Le pourcentage d'emprise peut également être compris entre 20 et 30%. Le pourcentage d'emprise a été déterminé par des résultats expérimentaux qui sont exposés ci-après dans la partie expérimentale de la description. Ainsi, lorsque le média comporte un filtre ou média filtrant, conformément à la partie expérimentale, le filtre produit une pression statique plus importante et induit une plus grande perte de charge que le média simple.

Dès lors, le pourcentage maximal d'emprise du dépôt de matière d'absorption à la surface du média filtrant est plus faible que pour un média simple. Dans ce cas, le pourcentage d'emprise peut être compris entre 4 et 20% et de préférence entre 5 et 16%. Lorsque les deux faces du média comprennent respectivement des dépôts de matière d'absorption 103, chaque face peut comprendre un pourcentage d'emprise tel que cela été décrit lorsqu'une seule face du média 102 comporte du dépôt de matière d'absorption de CO2.

Selon des modes de réalisation illustrés aux figures 1 à 6, le dépôt de la matière d'absorption 103 du CO2 est répartie à la surface du média 102 par alternance de zones de dépôt de matière d'absorption 103 avec de zones dépourvues de ladite matière qui permettent le passage d'un flux d'air au travers du média 102. Les zones dépourvues de de dépôt sont visibles selon motif quadrillé qui représente le média 102.

Selon les modes de réalisation des figures 1 à 4, le cadre 101 présente une forme rectangulaire et plus particulièrement carrée. Le dépôt de matière d'absorption 103 est quant à lui réalisé sous forme de bâtonnets 104 en ce qui concerne en tout cas les modes de réalisation des figures 1 à 3. Chaque bâtonnet peut être ici considéré comme une unité d'absorption de CO2. Néanmoins, les dépôts de matière d'absorption 103 du CO2 peuvent être fait selon d'autres formes géométriques tels que des cercles, des triangles, des parallélépipèdes etc.

Comme illustré à la figure 1, les bâtonnets 104 peuvent s'étendre longitudinalement de manière continue sur le média 102 d'un bord interne du cadre 101 au bord interne opposé dudit cadre. Dans le mode de réalisation de la figure 1, les bâtonnets sont parallèles entre eux et sont de mêmes dimensions. Ce mode de réalisation permet de simplifier le dépôt de la matière d'absorption 103 sur le média 102.

Selon le mode de réalisation de la figure 2, la cartouche d'absorption 100 comporte une alternance de bâtonnets 104 discontinus entre deux bords internes opposés du cadre 101 et de bâtonnets 104 continus entre les deux bords internes du cadre 101. Les bâtonnets 104 qu'ils soient continus ou discontinus présentent les mêmes dimensions en termes de largeur du dépôt sur le média 102. De plus les bâtonnets 104 sont également disposés de manière parallèle les uns aux autres.

La figure 3 illustre un autre mode de réalisation, dans lequel, les bâtonnets 104 distaux par rapport au bâtonnet central, s'étendent longitudinalement entre deux bords internes opposés du cadre 101. Ces bâtonnets distaux présentent une emprise sur le média 102 dont l'épaisseur est supérieure aux autres bâtonnets 104. Par ailleurs, le bâtonnet central 104 s'étend longitudinalement de part et d'autre sur l'axe médian transversal du cadre 101 sur une distance qui est inférieure à la distance entre les deux bords internes opposés du cadre 101. Les deux autres bâtonnets 104 qui sont proximaux du bâtonnet central 104 s'étendent longitudinalement sur une distance supérieure à celle du bâtonnet central et une distance inférieure à celle des bâtonnets distaux.

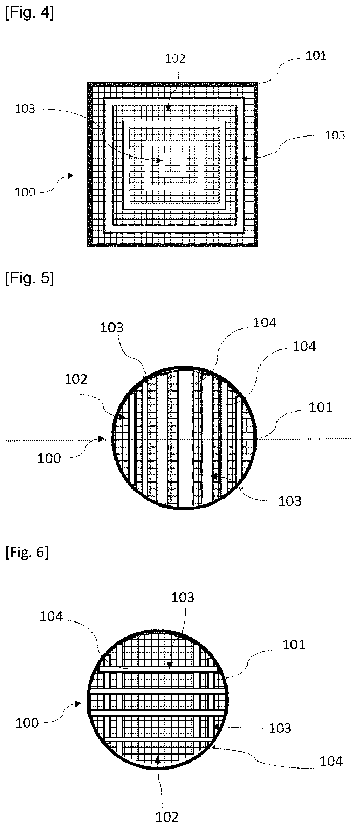

Un autre mode de réalisation est illustré à la figure 4, toujours avec un cadre 101 de forme carrée, le dépôt de la matière d'absorption 103 de CO2 est réalisé par des bâtonnets 104 qui sont agencés de manière à former des carrés disposés de manière coaxiale et de dimensions croissantes en partant du centre du cadre 101 jusqu'aux bords internes du cadre 101. A noter que l'épaisseurs des bâtonnets est également différentes selon la position du carré que forment les bâtonnets 104, par exemple, le carré central comporte des bâtonnets plus épais que le carré qui l'encadre. A noter que d'autres agencements de bâtonnets peuvent être envisagés conformément à la présente invention.

Le cadre 101 comporte une forme circulaire dans les modes de réalisation des figures 5 et 6. En particulier, dans l'exemple de la figure 5, le cartouche de d'absorption 100 de CO2 comprend des batônnets 104 qui s'étendent entre deux bords internes du cadre 101 qui sont opposés par rapport à un axe médian transversal du cadre 101. Selon ce mode de réalisation, les bâtonnets 104 sont agencés de manière parallèle et comportent des épaisseurs différentes en termes d'emprise sur le média 102. En particulier, l'épaisseurs des bâtonnets est décroissante depuis le bâtonnet 104 central jusqu'aux bâtonnets distaux. Ici, les bâtonnets 104 sont agencées de manière symétrique, toutefois un agencement aléatoire respectant le pourcentage d'emprise du dépôt de la matière d'absorption 103 du CO2 décrit précédemment est également conforme à l'invention.

La figure 6 illustre un mode de réalisation dans lequel les bâtonnets 104 sont agencés de sorte à s'entrecroiser. Bien qu'ici le cadre 101 soit circulaire, il est également possible d'entrecroiser les bâtonnets 104 dans un cadre 101 de forme différente.

De manière générale, lorsque les bâtonnets 104 sont agencés parallèles les uns aux autres, ils sont séparés les uns des autres d'un entrefer 105 de dimensions déterminées. L'entrefer 105 est schématisé à la figure 2 par une double flèche. Selon un mode de réalisation, l'entrefer 105 peut être compris entre 1 cm et 5 cm quel que soit l'agencement des bâtonnets 105 dès lors qu'ils sont parallèles.

Par ailleurs, comme cela est visible sur les figures 1 à 6, les bâtonnets 104 d'une même cartouche d'absorption 100 peuvent comprendre une largeur d'emprise sur le média 102 différentes les uns des autres. Ainsi, selon un autre mode de réalisation, la largeur de chaque bâtonnet 104 en emprise sur le média peut être comprise entre 5 mm et 20 mm, de préférence entre 10 mm et 18 mm, encore de préférence les bâtonnets présentent une largeur comprise entre 13 mm et 16 mm.

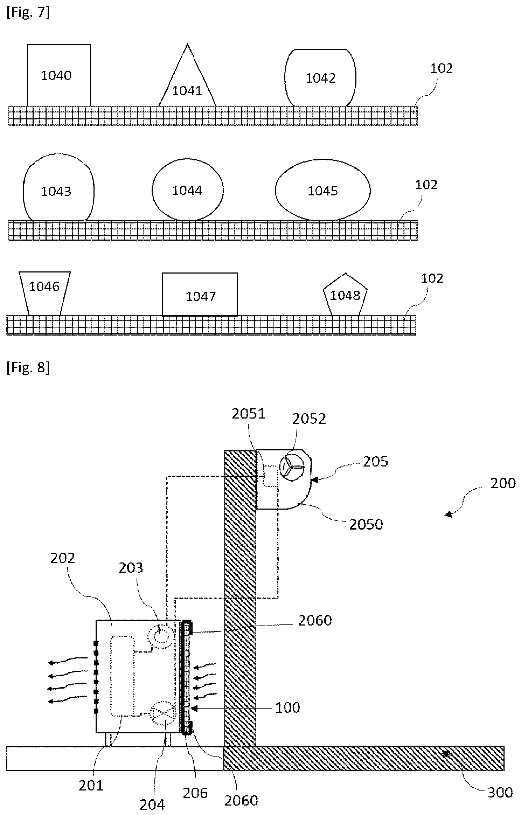

La figure 7 illustre plusieurs modes de réalisation qui sont relatifs à la forme de la section transversale des bâtonnets 104. Le tableau 1 ci-dessous répertorie et décrit les différentes de formes de section transversale de bâtonnets qui sont illustrées à la figure 7.

[Tableau 1]

| Référence du bâtonnet | Forme de la section transversale du bâtonnet |
|---|---|
| 1040 | Carrée |
| 1041 | Triangulaire, base du triangle en contact avec le média |
| 1042 | Deux côtés courbes et deux côtés aplatis dont un est en contact avec le média |
| 1043 | Arrondie avec un méplat en contact avec le média |
| 1044 | Circulaire |
| 1045 | Ovale |
| 1046 | Conique tronqué inversé, la troncature étant au contact du média |
| 1047 | Rectangulaire |
| 1048 | Pentagonal, la base du pentagone étant au contact du média |

L'inventeur a observé que les sections transversales qui s'évasent en s'éloignant du média 102 permettent d'améliorer la captation du dioxyde de carbone. Ainsi, les sections transversales 1043, 1044, 1045, 1046 et 1048 s'avèrent plus efficaces. De plus, les sections transversales évasées permettent de réduire la pression statique qui s'exerce au niveau de la cartouche d'absorption 100 de CO2.

Selon un mode de réalisation illustre à la figure 1, les bâtonnets 104 peuvent comprendre une armature 106 externe pour améliorer leur cohésion. A la figure 1, le bâtonnet 104 qui se trouve à gauche est représenté avec une armature 106 qui s'étend longitudinalement et ficèle radialement le bâtonnet 104 sur sa longueur. C'est d'ailleurs une ficelle qui peut être utilisée pour réaliser l'armature. Un brin 1060 de ficelle peut s'étendre longitudinalement en tournant au tour du bâtonnet 104, il est représenté sur la figure 1 par des hachures qui se répètent sur la longueur du bâtonnet 104. Un autre brin de ficelle 1061 peut quant à lui s'étendre longitudinalement selon un axe longitudinal du bâtonnet 104. Ici, un seul bâtonnet 104 est représenté avec une armature 106, toutefois, conformément à un mode de réalisation, il convient de noter que plusieurs bâtonnets ou même tous les bâtonnets 104 d'une même cartouche d'absorption 100 peuvent comprendre une telle armature 106.

[Matière d'absorption de CO2]

Selon un mode de réalisation de l'invention, l'inventeur a choisi d'utiliser une matière d'absorption 103 du CO2 qui permet d'absorber le CO2 par carbonatation. En particulier, la matière d'absorption 103 du CO2 peut être choisie parmi les substances suivantes : l'oxyde de calcium, de l'hydroxyde de lithium, de la chaux sodée, de l'hydroxyde de sodium, de l'hydroxyde de potassium, du charbon actif ou un mélange de ces substances.

Selon un mode de réalisation préférentiel, la matière d'absorption du CO2 comprend de l'oxyde de calcium. En effet, l'oxyde de calcium (CaO), qui est également connu sous l'appellation chaux vive. Ce composé chimique minéral comporte des propriétés d'absorption du CO2 par carbonatation qui sont bien connues. La carbonatation de l'oxyde de calcium permet de former du calcaire (CaCO3) selon l'équation chimique ci-dessous :

[Formule 1]

$$CaO_{(solide)} + CO_{2(gaz)} \rightarrow CaCO_{3(solide)}$$

Il est ainsi connu qu'un kilo de chaux vive est capable d'absorber environ 120 litres de CO2. Ce matériau est avantageusement peu onéreux et disponible en abondance car il peut être produit par calcination du calcaire à 825°C.

Avantageusement, le calcaire produit par la carbonatation de la matière déposée sur le média 102 peut ensuite être décarbonaté par calcination ou utiliser comme matériau de construction par exemple.

[Système de ventilation]

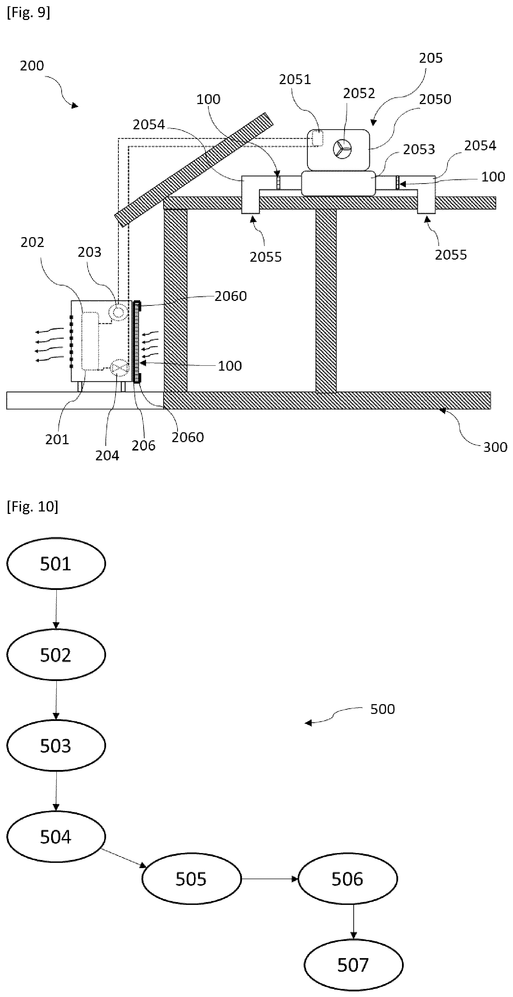

Comme cela est illustré aux figures 8 et 9, un mode de réalisation concerne également un système de ventilation 200 qui intègre au moins une cartouche d'absorption 100 de CO2 conforme de l'invention. Selon ces modes de réalisation, la cartouche d'absorption 100 est montée à l'arrière de l'échangeur 201 d'un groupe extérieur 202 de type pompe à chaleur air/air. Cette position correspond à l'ouïe d'aspiration du ventilateur de l'échangeur 201. Classiquement, le groupe extérieur 202 comprend un compresseur 203 et un détendeur 204 qui sont respectivement reliés à une unité intérieure 205. Comme cela est illustré, le système de ventilation 200 comporte un support 206 configuré pour recevoir la cartouche d'absorption 100. Le support 206 peut comprendre au moins deux rails 2060 qui sont configurés pour coopérer avec deux bords du cadre 101 de la cartouche 100. En particulier, les deux rails 2060 sont disposés de manière à coopérer avec deux bords opposés du cadre 101 de la cartouche 100.

Selon le mode de réalisation de la figure 8, l'unité intérieure 205 comporte un caisson 2050 qui embarque un échangeur de chaleur 2051 et un ventilateur 2052. Le caisson 2050 est ici fixé au mur intérieur du bâtiment 300, le caisson 2050 est ainsi configuré pour diffuser l'air directement dans la pièce du bâtiment.

Selon le mode de réalisation de la figure 9, le système de ventilation 200 est de type gainable. A ce titre, l'unité intérieure 205 est disposée dans un plafond/ faux plafond ou local technique. L'unité intérieure 205 comporte un caisson 2050 qui intègre un échangeur 2051, au moins un ventilateur 2052 qui insuffle l'air dans un plenum 2053 de distribution d'air. Des gaines 2054 de distribution d'air s'étendent depuis le plenum 2053 vers des bouches de ventilation 2055 qui ventilent respectivement une pièce du bâtiment 300. Les gaines 2054 peuvent être des gaines d'insufflation ou de reprise d'air. Comme cela est illustré, la cartouche d'absorption 100 peut être montée dans les gaines 2054 d'insufflation ou encore dans les gaines 2054 de reprise d'air. La cartouche d'absorption 100 peut également être montée au niveau des bouches de ventilation 2055.

En ce qui concerne le groupe extérieur 202, selon un autre mode de réalisation, le support 206 peut également être disposé sur la face avant dudit groupe, la cartouche d'absorption 100 est alors disposée en sortie de l'ouïe d'extraction du ventilateur de l'échangeur 201. Toutefois, il est préférable d'utiliser la face arrière car la surface de l'ouïe d'aspiration est plus grande que celle de l'ouïe d'extraction qui se trouve sur la face avant du groupe extérieur.

[Procédé de fabrication d'une cartouche d'absorption]

Comme illustré à la figure 10, un mode de réalisation concerne un procédé de fabrication 500 d'une cartouche d'absorption de CO2 conforme d'un mode de réalisation de l'invention.

Selon un mode de réalisation, le procédé de fabrication 500 peut comporter la mise en poudre 501 d'un matériau d'absorption du CO2. Selon un mode de réalisation, lorsque la matière d'absorption 103 comprend de l'oxyde de calcium, la mise en poudre 501 peut comprendre la calcination du calcaire pour produire de l'oxyde de calcium tel que cela est décrit précédemment. La mise en poudre 501 peut comprendre une étape de réduction mécanique de la chaux pour former une poudre. La réduction mécanique peut être réalisée par broyage et/ou malaxage du produit de la réaction de calcination du calcaire.

Selon le mode de réalisation de la figure 10, le procédé de fabrication 500 peut comprendre l'extrusion 502 du matériau d'absorption 103 du CO2 qui se trouve sous forme de poudre est compactée puis extrudée sous forme de boudin. Le boudin comprend une substance pâteuse afin de former un bâtonnet 104 qui est déposé sur le média 102.

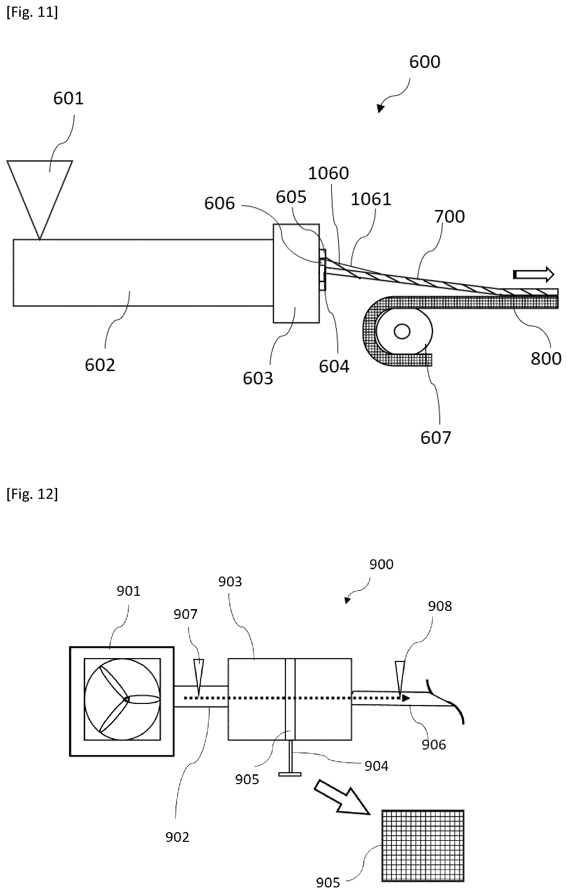

La figure 11 illustre une machine de fabrication 600 d'un média 102 comprenant des dépôts de la matière d'absorption de CO2 qui est conforme d'un mode de réalisation de l'invention. Ladite machine 600 comporte une trémie 601 qui constitue une réserve de poudre de l'oxyde de calcium. La trémie 601 alimente une vis sans fin 602 qui achemine la poudre d'oxyde de calcium vers l'extrudeuse 603. L'extrudeuse 603 compacte la poudre d'oxyde de calcium pour former une substance pâteuse qui est extrudée sous forme d'un ou plusieurs boudins 700. Avantageusement, l'extrudeuse 603 peut comporter un nombre déterminé de filières 604 qui sont disposées en sortie de l'extrudeuse 603 et écartées les unes des autres d'une distance correspondant à l'entrefer 105. Le procédé de fabrication 500 peut ainsi extruder simultanément plusieurs boudins 700.

Selon un mode de réalisation, le procédé de fabrication 500 peut comprendre une étape de renforcement 503 du dépôt d'oxyde de calcium. Lors de cette étape une armature 106 est déployée autour du boudin 700 en cours d'extrusion afin de l'enserrer. En particulier, la partie du boudin 700 qui sort de la filière est entourée radialement par le dépôt d'un premier brin 1060 de ficelle. A cet effet, une filière rotative 605 peut être montée en sortie de l'extrudeuse 603 (voir figure 11). Selon le procédé de fabrication 500, un second brin 1061 de ficelle est déposé longitudinalement sur le boudin 700 en formation. Dans l'exemple de la figure 11, la machine 600 comprend une filière fixe 606 configurée pour déposer le second brin 1061 longitudinalement sur le boudin 700 en formation. La filière rotative 605 et la filière fixe 606 peuvent être alimentées en ficelle.

Selon le mode de réalisation de la figure 10, le procédé de fabrication 500 peut comporter le dépôt 504 du boudin 700 d'oxyde de calcium sur un média 102. Avantageusement, le média 102 peut être entrainé en déplacement simultanément à l'extrusion du boudin 700 afin déposer directement le ou les boudins en formation à la surface du média 102. Dans l'exemple de la figure 11, une laize 800 de média est entraînée en rotation par des moyens de mise en rotation, tels qu'un ou des rouleaux d'entrainement 607. Ici, la laize 800 est disposée en sortie de l'extrudeuse 603 de façon à recevoir directement le ou les boudins 700 en formation. Le ou les boudins se déposent ainsi longitudinalement sur la laize 800 tout au cours de leur formation par extension longitudinale. La vitesse de déplacement de laize 800 peut être réglée par rapport à la vitesse d'extrusion pour améliorer le procédé de fabrication 500.

Le procédé de fabrication 500 peut également comprendre une étape de découpe 505 de la laize 800 aux dimensions du cadre 101. Lors de l'étape de découpe 505, la laize 800 de média 102 est découpée mais le ou les boudins 700 le sont également afin de former les bâtonnets 104 d'oxyde de calcium. Selon dimensions du cadre 101, la découpe peut être adaptée et plusieurs dimensions de laize 800 peuvent être employées. Lorsque l'on souhaite fabriquer une cartouche d'absorption 100 comprenant un média filtrant, une laize 800 de matériau filtrant est directement employée dans un procédé identique à celui décrit dans les figures 10 et 11.

Le procédé de fabrication 500 peut comprendre une étape de fixation du média 102 découpé à cadre afin de former la cartouche d'absorption 100 de $CO_2$. Cette étape consiste à attacher le média 102 au cadre 101, par exemple, par collage ou enserrement dans une gorge périphérique ménagée dans les bords internes du cadre 101.

Comme illustré à la figure 10, le procédé de fabrication 500 peut comprendre une étape d'emballage 507 de la cartouche d'absorption 100 de $CO_2$. L'étape d'emballage 507 peut être faite sous vide. Cette étape permet de réduire les échanges entre l'air et les bâtonnets 104 d'oxyde de calcium qui disposent d'une capacité d'absorption de $CO_2$ limitée. L'emballage améliore la durée des cycles de remplacement des cartouches d'absorption 100. En effet, lorsque la matière qui compose les bâtonnets 104 a été entièrement carbonatée, elle ne peut plus capter de $CO_2$. La cartouche d'absorption 100 doit ainsi être remplacée périodiquement. Par exemple, la cartouche d'absorption 100 peut être remplacée tous les 3 à 6 mois.

[Partie expérimentale]

La figure 12 illustre une installation expérimentale 900 qui a été utilisée par l'inventeur pour déterminer le pourcentage d'emprise de la matière d'absorption du $CO_2$ sur le média 102 en fonction de la perte de charges qui est définie par les constructeurs de matériel de ventilation.

L'installation 900 comprend une unité de production 901 d'un flux d'air qui alimente un premier conduit aéraulique 902. Ce dernier est relié fluidiquement à un caisson 903 de diffusion du flux d'air. Le caisson 903 présente des dimensions plus importantes que le conduit 902 ce qui permet d'homogénéiser le flux d'air. Un tiroir 904 est installé dans le caisson 903 de manière à positionner perpendiculairement au flux d'air une cartouche d'absorption 905. Le flux d'air est ici schématisé par une flèche en pointillé. Le tiroir 904 est disposé au centre du caisson 903 qui communique avec un second conduit aéraulique 906 qui se trouve en aval de la cartouche d'absorption 905. Un premier capteur de pression et de débit 907 est monté en amont de ladite cartouche au niveau du premier conduit 902, alors qu'un second capteur de pression et de débit 908 est monté en aval de ladite cartouche, en particulier, dans le second conduit aéraulique 906.

Les expériences suivantes consistent à tester des cartouches qui sont chargées par différentes quantités d'oxyde de calcium, en particulier, l'inventeur à procéder à plusieurs tests dans lesquels en utilisant des pourcentages d'emprise de l'oxyde de calcium sur la surface du média 102 qui sont différents. Les mesures de pression en amont et en aval de la cartouche d'absorption 905 permettent de définir la perte de charges que produit ladite cartouche dans le caisson 903.

Lors de chaque test l'inventeur a relevé les débits entrants et sortants du caisson 903 ainsi que les pressions amont et aval de la cartouche d'absorption 905.

[Expérience 1]

Tout d'abord, l'inventeur a réalisé une expérience témoin 1 dans lequel le tiroir 904 est vide. Cette expérience témoin a pour objectif de vérifier que l'installation 900 présente une faible perte de charges entre les deux points de mesure.

Dans tous les tableaux qui exposent les résultats des mesures expérimentales, les valeurs P entrée et P sortie correspondent respectivement aux pressions aval et amont du caisson 903. De la même, Débit entrée et débit sortie correspondent respectivement aux débits mesurés en amont et aval du caisson 903 et donc du tiroir 904 qui supporte la cartouche d'absorption 905.

[Tableau 2]

| Résultats | |
|---|---|
| Expérience 1 | |
| P entrée | 10 Pa |
| P sortie | 3 Pa |
| Débit entrée | 975 m3/h |
| Débit sortie | 940 m3/h |

Dans cette expérience 1 on relève une faible perte de charges, d'une part, en termes de pression qui ici est de 7 Pascal (Pa), et d'autre part, en termes de débit avec une perte d'uniquement 35 m3/h. Ces pertes de charges sont imputées au caisson 903 et peuvent être utilisées comme base de comparaison. Ces pertes de charges sont faibles et valident une bonne fabrication de l'installation sans défaut d'étanchéité.

[Expérience 2]

Dans l'expérience 2, le tiroir 904 est chargé d'une cartouche d'absorption 905 dont le média comprend un filtre à air en polyester ISOPREFIL® de type G4 commercialisé par la société ISOFILTER®. Ce type de filtre est utilisé en standard sur tous systèmes de ventilation gainable ou les VMC.

[Tableau 3]

| Résultats | |
|---|---|
| Expérience 2 | |
| P entrée | 57 Pa |
| P sortie | 12 Pa |
| Débit entrée | 942 m3/h |
| Débit sortie | 926 m3/h |

On constate une perte de charges de 45 Pa qui est conforme aux prérogatives des constructeurs, en effet, ces derniers conseillent une perte de charges comprise entre 30 et 80 Pa et plus particulièrement entre 50 à 70 Pa.
L'expérience 2 confirme la possibilité d'utiliser un filtre en polyester en guise de média car la perte de charges qu'il produit est inférieure aux prérogatives des constructeurs.

[Expérience 3]

Lors de l'expérience 3, le tiroir 904 est chargé d'une cartouche d'absorption 905 dont le média comprend un filtre à air en polyester ISOPREFIL® de type G4 commercialisé par la société ISOFILTER®.
Le filtre à air est carré et présente des côtés de 500 mm, la surface du filtre est donc de 250000 mm2. A la surface du média constitué par le filtre à air, sept bâtonnets d'oxyde de calcium de 16 mm de diamètre, sont répartis sur une face du filtre à air. Les bâtonnets s'étendent entre deux bords internes du cadre, ainsi un bâtonnet présente une emprise latérale/transversale de 4 mm qui correspond à la largeur du bâtonnet et une emprise longitudinale de 500mm qui correspond à la longueur du bâtonnet.
La surface d'emprise des bâtonnets sur le filtre peut être calculée comme suit (4x500) x 7 = 14 000 mm2. Ce qui correspond à 5.6 % de la surface du filtre. A noter que le volume total des bâtonnets répartis sur le filtre est de 0.703 Litres. Conformément à l'invention, la surface d'emprise des bâtonnets correspond à la surface d'emprise de la matière d'absorption du CO2 sur la surface du média.

[Tableau 4]

| Résultats | |
|---|---|
| Expérience 3 | |
| P entrée | 58 Pa |

(suite)

| Résultats | |
|---|---|
| Expérience 3 | |
| P sortie | 13 Pa |
| Débit entrée | 941 m3/h |
| Débit sortie | 928 m3/h |

On relève ici une perte de charges de 45 Pa qui est similaire à la perte de charges mesurée dans l'expérience 2 témoin. De manière étonnante, l'on constate que lorsque la surface d'emprise occupée par les bâtonnets est de l'ordre de 5%, les bâtonnets ne modifient pas la pression statique qui s'applique sur la cartouche d'absorption 905.

[Expérience 4]

L'expérience 4 diffère de l'expérience 3 en ce que le filtre est chargé de neuf bâtonnets de 10 mm de diamètre. Ce qui correspond à une surface d'emprise de 13 500 mm$^2$ (3 mm x 500 mm x 9) qui représente 5,4 % de la surface du filtre. Le volume des bâtonnets est en revanche plus faible que pour l'expérience 3 puisqu'il représente 0.275 Litres.

[Tableau 5]

| Résultats | |
|---|---|
| Expérience 4 | |
| P entrée | 56 Pa |
| P sortie | 13 Pa |
| Débit entrée | 945 m3/h |
| Débit sortie | 941 m3/h |

On relève ici une perte de charges 43 Pa en pression et 4 m3/h en termes de débit. La faible différence entre des bâtonnets de 10 mm et de 16 mm de diamètre pour l'expérience 3 en rapport avec la différence du volume totale des bâtonnets montre que le rapport pertes de charge/capacité d'absorption qui dépend du volume est plus favorable pour les bâtonnets de 16 mm de diamètre pour leur utilisation sur un média qui comporte un filtre à air.

[Expérience 5]

Pour l'expérience 5, le tiroir 903 est chargé d'une cartouche d'absorption 905 de CO2 qui comporte un cadre de forme carré qui comporte des côtés de 500 mm de long. Le média qui est monté sur le cadre est un support en polyester qui comporte des mailles de 5x4mm polyester. Le média est chargé sur une face de sept bâtonnets de 16 mm. La surface d'emprise des bâtonnets sur la surface du média correspond à 14 000 mm$^2$, alors que le volume totale des bâtonnets est de 0,703 Litres. Cette surface représente un pourcentage d'emprise de 5,6% par rapport à la surface du média.

[Tableau 6]

| Résultats | |
|---|---|
| Expérience 5 | |
| P entrée | 13 Pa |
| P sortie | 4 Pa |
| Débit entrée | 974 m3/h |
| Débit sortie | 935 m3/h |

On relève ici une perte de charges de 9 Pa et des valeurs de pression relativement faible en comparaison de l'expérience 3 qui utilise la même configuration de bâtonnets qui sont agencés sur un filtre G4. Ce qui signifie que le média en polyester à maille 5x4mm produit une pression statique très faible au niveau de la cartouche d'absorption 905. Cette pression statique n'est d'ailleurs supérieure que de 2 Pa par rapport à l'expérience 1 témoin dans laquelle le tiroir 903 est vide.

Comme la ventilation des compresseurs des unités extérieures est calibrée à la pression de travail. Cette faible pression statique permet d'installer une cartouche d'absorption de l'expérience 5 qui est conforme d'un mode de réalisation de l'invention, sur une ouïe d'entrée ou de sortie des compresseurs/ventilateurs des unités expériences d'un système de ventilation.

[Expérience 6]

L'expérience 6 diffère de l'expérience 5 en ce que le média est chargé de onze bâtonnets de 10 mm de diamètre. La surface d'emprise des bâtonnets est donc de 16 500 mm$^2$ (3mm x 500mm x 11), qui correspond à 6,6% de la surface du média. Le volume total des bâtonnets est quant à lui de 0.43 Litres.

[Tableau 7]

| Résultats | |
|---|---|
| Expérience 6 | |
| P entrée | 15 Pa |
| P sortie | 4 Pa |
| Débit entrée | 972 m3/h |
| Débit sortie | 930 m3/h |

On relève une perte de charges de 9 Pa qui est identique à la perte de charges de l'expérience 5. Considérant la différence de volume entre l'agencement des bâtonnets de l'expérience 5 et de l'expérience 6, il est préférable d'utiliser la configuration de l'expérience 5 qui présente une plus grande capacité d'absorption du CO2. On peut également noter qu'il possible d'obtenir une meilleure capacité d'absorption en disposant moins de bâtonnets en nombre sur une même surface de média mais des bâtonnets dont le diamètre ou la section transversale est plus importante. La comparaison respective entre les expériences 5 et 6 entre elles mais aussi entre les expériences 3 et 4 entre elles montrent que la différence de pertes de charges est négligeable.

Au regard de ces résultats, il est possible de déterminer par extrapolation de déterminer un pourcentage maximal d'emprise de la substance d'absorption à la surface du média de compris entre 20 et 50% pour un média simple, de préférence entre 20 et 30% pour un média simple. Alors que le pourcentage maximal d'emprise de la substance d'absorption à la surface du média peut être de 20% pour un média comprenant un filtre. Ainsi, une plage de 4% à 30% peut être adaptée à la fois à l'utilisation d'un média simple et d'un média comprenant un filtre.

Dans le cas des expériences 3 et 5, il est possible de disposer sur une face du média 0,7 L de substance d'absorption pour un média dont la surface est de 250 000 mm$^2$. Ainsi, les résultats de ces expériences montrent qu'il est possible de charger un média conformément à la répartition de l'oxyde de calcium dans ces expériences de 2,8 L/m$^2$.

Selon la répartition par bâtonnets de 16 mm de diamètre, cela représente 5,6% de la surface de média. Or, nous avons montré qu'il est possible de recouvrir à 20 % de la surface d'une face du média tout en respectant les pertes de charge conseillées par les constructeurs. Si l'on charge à 20% la surface du média, le dépôt oxyde de calcium que l'on obtient avec des bâtonnets de 16 mm de diamètre revient à 10 L/m$^2$.

Etant donné que la masse volumique d'oxyde de calcium est comprises entre 700 et 1300 kg/m3. Il est théoriquement possible de déposer au mètre carré sur le média entre 7 kg et 13 kg d'oxyde de calcium. La capacité d'absorption de CO2 étant 120 L par kilogramme d'oxyde de calcium, selon le mode de réalisation des expériences 3 et 5, il est possible de capter entre 840 L et 1520 L de CO2 par mètre carré avant que la cartouche d'absorption 100 soit changée. En chargeant le média entre 20 et 50% ou en équipant chaque face du média, on augmente encore les capacités d'absorption en CO2 de la cartouche conforme d'un mode de réalisation de l'invention.

En se basant sur le même raisonnement théorique les capacités d'absorption de CO2 selon les expériences 3 à 6 sont les suivantes :

[Tableau 8]

| | Expérience 3 | Expérience 4 | Expérience 5 | Expérience 6 |
|---|---|---|---|---|
| Pourcentage d'emprise sur le média | 5,6% | 5,2% | 5,6% | 6,6% |
| Volume d'oxyde de calcium en Litre | 0,703 | 0,275 | 0,703 | 0,43 |

(suite)

|  | Expérience 3 | Expérience 4 | Expérience 5 | Expérience 6 |
|---|---|---|---|---|
| Volume d'oxyde de calcium déposé sur le média au m2 | 2,812 | 1,1 | 2,812 | 1,72 |
| Capacité d'absorption théorique du $CO_2$ en $L/m^2$ | 236-439 | 92 -172 | 236-439 | 144 - 268 |

Selon la cartouche des expériences 3 et 5 qui sont des modes de réalisation préférentiels, pour un pourcentage d'emprise compris entre 5% et 20% de la surface d'une face du média, il est théoriquement possible de capter entre 236 L et 1520 L de $CO_2$ par cartouche d'absorption de $CO_2$.

**Revendications**

1.  Cartouche d'absorption (100) de $CO_2$ configurée pour être intégrée à un système de ventilation (200) d'un bâtiment de manière à être disposée au passage de l'air, la cartouche d'absorption (100) comportant :

    - un cadre (101) de forme et de dimensions déterminées,
    - un média (102) perméable à l'air qui s'étend à l'intérieur du cadre (101) et constitue une surface utile de passage de l'air,
    - une matière d'absorption (103) du $CO_2$ qui est déposée à la surface du média (102), le dépôt de la matière d'absorption (103) comportant une emprise sur la surface du média (102) qui est comprise entre 4 et 30% de la surface du média (102).

2.  Cartouche d'absorption (100) selon la revendication 1, dans laquelle, le dépôt de matière d'absorption (103) du $CO_2$ est réparti, à la surface du média (102), par alternance de zones de dépôt de matière d'absorption (103) de $CO_2$ et de zones de passage d'air qui ne sont pas recouvertes de matière d'absorption (103) du $CO_2$, l'alternance desdites zones est aléatoire ou géométrique.

3.  Cartouche d'absorption (100) selon l'une des revendications 1 et 2, dans laquelle, le dépôt de matière d'absorption (103) du $CO_2$ est réparti sur le média (102) selon une ou plusieurs unités d'absorption, en particulier, les unités d'absorption comportent une ou plusieurs formes géométriques déterminées.

4.  Cartouche d'absorption (100) selon l'une des revendications 1 à 3, dans laquelle, la matière d'absorption (103) du $CO_2$ est répartie à la surface du média (102) selon des dépôts en forme de bâtonnets (104) de dimensions déterminées.

5.  Cartouche d'absorption (100) selon l'une des revendications 1 à 4, dans laquelle, les bâtonnets comprennent une armature externe, de préférence, l'armature s'étend longitudinalement et ficèle radialement le bâtonnet sur sa longueur.

6.  Cartouche d'absorption (100), selon la revendication 5, dans laquelle, l'armature comprend un premier brin de ficelle s'étendant longitudinalement en tournant au tour du bâtonnet, de préférence, l'armature comprend un deuxième brin de ficelle s'étendant longitudinalement selon un axe longitudinal du bâtonnet.

7.  Cartouche d'absorption (100) selon l'une des revendications 1 à 6, dans lequel, la matière d'absorption (103) du $CO_2$ est configurée pour absorbée le $CO_2$ par carbonatation.

8.  Cartouche d'absorption (100) selon l'une des revendications 1 à 7, dans laquelle, la matière d'absorption (103) du $CO_2$ est choisie parmi les substances suivantes : l'oxyde de calcium, de l'hydroxyde de lithium, de la chaux sodée, de l'hydroxyde de sodium, de l'hydroxyde de potassium, du charbon actif ou un mélange de ces substances.

9.  Cartouche d'absorption (100) selon l'une des revendications 1 à 8, dans laquelle, la matière d'absorption (103) du $CO_2$ comprend de l'oxyde de calcium.

10. Cartouche d'absorption (100) selon l'une des revendication 1 à 9, dans laquelle, le média (102) comporte des mailles de dimensions déterminées, de préférence, les mailles comprennent des dimensions comprises entre 3 mm x 2 mm et 10 mm x 8 mm, encore de préférence, les mailles comprennent des dimensions comprises entre 4 mm x 3 mm et 6 mm x 5 mm, et encore de préférence, les mailles comprennent des dimensions de 5 mm x 4 mm.

11. Cartouche d'absorption (100) selon l'une des revendications 1 à 10, dans lequel, le média comprend un filtre à air, de préférence, le filtre à air comprend une épaisseur comprise entre 10 mm et 120 mm, l'épaisseur s'étendant dans le sens de circulation du flux d'air.

12. Cartouche d'absorption (100) selon l'une des revendications 1 à 11, dans laquelle, la forme et les dimensions du cadre (101) sont adaptées à une section transversale d'un conduit aéraulique et/ou aux dimensions d'une ouïe de ventilateur et/ou aux dimensions et à la forme d'une ouïe de ventilation.

13. Système de ventilation (200) comportant une cartouche d'absorption (100) de CO2 définie selon l'une des revendications 1 à 12, le système (200) comportant au moins un support (206) configuré pour disposer ladite cartouche (100) dans un flux d'air produit par un ventilateur, en particulier, le support (206) est disposé sur une ouïe d'aspiration ou de ventilation d'un groupe extérieur (202) d'un système d'air conditionné, et préférentiellement, le support (206) est disposé dans un conduit aéraulique.

14. Procédé de fabrication (500) d'une cartouche d'absorption (100) de CO2 définie selon l'une des revendications 1 à 12, le procédé de fabrication (500) comportant :

- Mise en poudre (501) du matériau d'absorption du CO2,
- Extrusion (502) du matériau d'absorption du CO2,
- Dépôt (504) dudit matériau d'absorption extrudé sur un média selon une disposition déterminée,
- Découpe (505) du média chargé en matériau d'absorption extrudé, et
- Fixation (506) du média chargé en matériau d'absorption découpé sur un cadre.

15. Machine de fabrication (600) pour la fabrication d'une cartouche d'absorption (100) de CO2 définie selon l'une des revendications 1 à 12, la machine de fabrication (600) comprenant:

- Une extrudeuse (603) configurée pour produire un ou des boudins (700) de matière d'absorption de CO2, l'extrudeuse étant alimentée en matière d'absorption de CO2,
- Des moyens d'entrainement (607) d'une laize (800) de média, les moyens d'entrainement (607) étant disposés en sortie de l'extrudeuse (603) afin que le ou les boudins (700) se déposent sur la laize (800) en sortie de l'extrudeuse (603), les moyens d'entrainement (607) étant configurés pour que la vitesse de déplacement de la laize (800) soit corrélée avec la vitesse d'extrusion du ou des boudins (700).

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

Europäisches
Patentamt

European
Patent Office

Office européen
des brevets

**RAPPORT DE RECHERCHE EUROPEENNE**

Numéro de la demande

EP 25 17 1414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/160912 A1 (HRYCAK MICHAEL B [US] ET AL) 28 juillet 2005 (2005-07-28) | 15 | INV.<br>B01D53/62 |
| A | * alinéas [0040] - [0078]; figures 1-3, 18 * | 1-14 | B01D53/04<br>C01B32/50 |
| | - - - - - | | |
| A | US 2015/004065 A1 (SOULIE JEAN-PIERRE [FR] ET AL) 1 janvier 2015 (2015-01-01) * alinéas [0033] - [0042], [0084] - [0090]; figures 2A, 2B * | 1-14 | |
| | - - - - - | | |
| A | US 2011/206572 A1 (MCKENNA DOUGLAS B [US] ET AL) 25 août 2011 (2011-08-25) * alinéas [0089] - [0140]; figures 1-3, 12; exemple 2 * | 1-14 | |
| | - - - - - | | |
| A | US 2023/125924 A1 (NAWAZ KASHIF [US] ET AL) 27 avril 2023 (2023-04-27) * alinéas [0035] - [0042]; figures 1-2 * | 1-14 | |
| | - - - - - | | |
| A | US 2015/135951 A1 (CHEN YUDONG [US] ET AL) 21 mai 2015 (2015-05-21) * alinéas [0004] - [0052]; figures 1-4 * | 1-14 | **DOMAINES TECHNIQUES RECHERCHES (IPC)**<br><br>B01D<br>F24F<br>C01B |
| | - - - - - | | |

Le présent rapport a été établi pour toutes les revendications

| Lieu de la recherche | Date d'achèvement de la recherche | Examinateur |
|---|---|---|
| La Haye | 25 juillet 2025 | Bocciardo, Davide |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 17 1414

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-07-2025

| Document brevet cité au rapport de recherche | Date de publication | Membre(s) de la famille de brevet(s) | | Date de publication |
|---|---|---|---|---|
| US 2005160912 A1 | 28-07-2005 | AU | 2005280633 A1 | 09-03-2006 |
| | | EP | 1713565 A1 | 25-10-2006 |
| | | JP | 2007526822 A | 20-09-2007 |
| | | US | 2005160912 A1 | 28-07-2005 |
| | | US | 2005160913 A1 | 28-07-2005 |
| | | WO | 2006025853 A1 | 09-03-2006 |
| US 2015004065 A1 | 01-01-2015 | CN | 104248891 A | 31-12-2014 |
| | | EP | 2826539 A1 | 21-01-2015 |
| | | ES | 2914054 T3 | 07-06-2022 |
| | | FR | 3007668 A1 | 02-01-2015 |
| | | JP | 6807913 B2 | 06-01-2021 |
| | | JP | 2015051261 A | 19-03-2015 |
| | | JP | 2019034238 A | 07-03-2019 |
| | | KR | 20150002497 A | 07-01-2015 |
| | | PT | 2826539 T | 11-05-2022 |
| | | US | 2015004065 A1 | 01-01-2015 |
| US 2011206572 A1 | 25-08-2011 | EP | 2528677 A1 | 05-12-2012 |
| | | US | 2011206572 A1 | 25-08-2011 |
| | | US | 2014305309 A1 | 16-10-2014 |
| | | WO | 2011094296 A1 | 04-08-2011 |
| US 2023125924 A1 | 27-04-2023 | US | 2023125924 A1 | 27-04-2023 |
| | | WO | 2023076391 A1 | 04-05-2023 |
| US 2015135951 A1 | 21-05-2015 | US | 2015135951 A1 | 21-05-2015 |
| | | WO | 2015077513 A1 | 28-05-2015 |

EPO FORM P0460

**RÉFÉRENCES CITÉES DANS LA DESCRIPTION**

**Documents brevets cités dans la description**

• GB 2476638 A